## Europäisches Patentamt
## European Patent Office
## Office européen des brevets

(11) Veröffentlichungsnummer: **0 236 518**
**B1**

(12) # EUROPÄISCHE PATENTSCHRIFT

(45) Veröffentlichungstag der Patentschrift:
17.05.89

(51) Int. Cl.⁴: **G01M 17/00**

(21) Anmeldenummer: **86103148.2**

(22) Anmeldetag: **08.03.86**

(54) Verfahren zur automatischen Bewegung eines Kraftfahrzeugbetätigungsteils sowie Vorrichtung zur Durchführung des Verfahrens.

(43) Veröffentlichungstag der Anmeldung:
16.09.87 Patentblatt 87/38

(45) Bekanntmachung des Hinweises auf die Patenterteilung:
17.05.89 Patentblatt 89/20

(84) Benannte Vertragsstaaten:
AT DE GB IT

(56) Entgegenhaltungen:
DE-A- 3 303 588

(73) Patentinhaber: **CARL SCHENCK AG,
Landwehrstrasse 55 Postfach 40 18,
D-6100 Darmstadt(DE)**

(72) Erfinder: **Storck, Karlheinz, Dr., Waldstrasse 84,
D-6109 Mühltal 2(DE)**

(74) Vertreter: **Dallhammer, Herbert, Dipl.-Ing., CARL
SCHENCK AG Patentabteilung
Postfach 4018 Landwehrstrasse 55,
D-6100 Darmstadt(DE)**

## Beschreibung

Die Erfindung betrifft ein Verfahren zur automatischen Bewegung eines Kraftfahrzeugbetätigungsteils durch eine Fahreinrichtung, wobei zwischen Fahreinrichtungsgehäuse und Betätigungsteil mechanisch eine Verbindung hergestellt wird sowie eine Vorrichtung zur Durchführung des Verfahrens mit einem im Fahrgastraum eines Kraftfahrzeugs arretiert angeordneten Gehäuse und an diesem angeordneten, angetriebenen, ausfahrbaren Verbindungsteilen.

Wenn Kraftfahrzeuge komplett hergestellt sind, ist eine Funktionskontrolle erforderlich. Zur Funktionskontrolle der Betätigungsteile, die vom Fahrersitz aus bewegt werden, wird das Fahrzeug auf einen Rollenprüfstand gefahren und dort die Betätigungsteile wie Gaspedal, Kupplungspedal und Bremspedal einerseits sowie die Schalteinrichtung andererseits auf ihre Funktionsfähigkeit untersucht. Um dies zu ermöglichen, hat man bisher z. B. den Fahrzeugsitz ausgebaut und anstelle des Sitzes eine Fahreinrichtung eingebaut, die über Verbindungselemente zwischen der Faheinrichtung und dem Gas-, Brems- und Kupplungspedal einerseits und einem Verbindungsmittel zwischen Fahreinrichtung und Schalthebel andererseits sowohl Beschleunigungs- und Verzögerungsvorgänge als auch Schaltvorgänge bewirkt. Der Betrieb einer derartigen Einrichtung ist wegen des erforderlichen Ausbaus des Fahrersitzes zeitaufwendig. Auch erfordert die Anpassung der Verbindungselemente zu den Pedalen im Hinblick auf die Ausrichtung und im Hinblick darauf, daß im Ruhezustand noch keine Betätigung der Einzelpedale auftreten soll, einen beachtlichen Arbeitsaufwand. Um die Untersuchungsergebnisse verschiedener Fahrzeuge miteinander zu vergleichen, ist bei jedem Fahrzeug der Serie darauf zu achten, daß trotz der zugelassenen Toleranz der Anordnung der Betätigungseinrichtung beispielsweise ein Schleifen der Kupplung oder der Bremse oder ein nicht völliges Ausrücken des Ganges vermieden wird, wenn die Verbindungselemente zwischen Fahreinrichtung und Betätigungsteil in ihrer Ausgangsstellung sind. Gleichzeitig ist zu vermeiden, daß große Leerwege zurückgelegt werden müssen, bis das Verbindungsmittel mit dem Betätigungsteil in Verbindung tritt, beispielsweise dann, wenn für Kraftstoff Verbrauchsmessungen und Abgasuntersuchungen in vorgegebenen Zeitabständen eine Folge von Schaltvorgängen, Beschleunigungs- und Verzögerungsvorgängen durchgeführt werden soll. Das geringe Raumangebot im Bereich der Betätigungsteile tritt noch erschwerend für die erforderlichen Einstellarbeiten hinzu.

Es wird auch versucht, anstelle des Ausbaus des Kraftfahrzeugsitzes eine Fahreinrichtung auf dem eingebauten Fahrzeugsitz anzuordnen und diese dabei an der Lehne des Fahrzeugsitzes abzustützen und an den Seiten des Sitzpolsters zu orientieren. Hierdurch wird die Zeit des Ein- und Ausbaus des Fahrzeugsitzes eingespart, hierzu ist jedoch eine zusätzliche Halteeinrichtung außerhalb des Fahrzeugs erforderlich (DE-Al 3 303 588). In Bezug auf die exakte Einstellung werden jedoch die aufgezeigten Nachteile mit übernommen bzw. noch vergrößert, da die Rücklehne und Seitenteile des Kraftfahrzeugsitzes in der Regel verstellbar und elastisch sind sowie Einbautoleranzen unterliegen. Auch wenn als Verbindungselement ein einstellbarer Stab mit einer Rolle zur Auflage auf dem zu betätigenden Betätigungsteil z.B. der Kupplung verwendet wird, entstehen infolge der verschiedenen Bewegungsbahnen vom Kupplungspedal und Stabende Zwangskräfte auf den Stab. Da die Rolle selbst lediglich die Reibungskräfte herabsetzt, jedoch die Kraftkomponenten in Normalenrichtung zur Abrollbahn der Rolle auf der gekrümmten Trittfläche des Kupplungspedals wirken.

Ausgehend hiervon liegt der Erfindung die Aufgabe zugrunde, in vorgegebener Lage angeordnete Kraftfahrzeugbetätigungsteile durch arretiert angeordnete Fahreinrichtungen gegeneinander so einzurichten und zu betätigen, daß hierbei praktisch keine Zwangskräfte auf die Kraftfahrzeugbetätigungsteile übertragen werden und daß der bereits montierte Fahrersitz eingebaut bleibt. Diese Aufgabe wird durch die kennzeichnenden Merkmale des Verfahrensanspruchs 1 gelöst. Durch eine Orientierung des Verbindungsteils am Betätigungsteil und durch die Kompensation auftretender Zwangskräfte, hervorgerufen durch vorgegebene unterschiedliche Bahnkurven von Betätigungsteil und Verbindungsteil während der Betätigung, werden aussagekräftige Meßergebnisse erreicht, die reproduzierbar sind. Dies gilt auch für extreme seitliche Abweichungen zwischen Fahreinrichtung und Betätigungsteil.

In Ausgestaltung des erfinderischen Verfahrens wird jedem Betätigungsteil ein mechanisches Verbindungsteil zugeordnet, wobei die in jedem Verbindungsteil auftretenden Zwangskräfte unabhängig und getrennt voneinander kompensiert werden.

Die in Anspruch 3 unter Schutz gestellte Vorrichtung zur Durchführung des Verfahrens, die von einem im Fahrgastraum eines Kraftfahrzeugs arretiert angeordneten Gehäuse und an diesem angeordneten, angetriebenen, ausfahrbaren Verbindungsteilen ausgeht, sieht erfindungsgemäß ein Betätigungsgehäuse mit je einem Verbindungsteil für das Gas-, Brems- und Kupplungspedal vor, wobei jedes Verbindungsteil zum entsprechenden Betätigungsteil orientierbar ist und weiterhin daß ein ebenfalls im Fußraum des Kraftfahrzeugs angeordnetes Schaltgehäuse vorgesehen ist, das zwei Antriebe für ein Verbindungsteil zum Schalthebel enthält, und daß beide Gehäuse innerhalb des Fahrzeuges verbindbar sind, und daß mindestens eines der beiden Gehäuse an einer Bezugsplattform reproduzierbar arretiert wird, wobei sich die Bezugsplattform am Lenkrad des Fahrzeugs abstützt und an diesem ausrichtbar ist. Mit dieser erfindungsgemäßen Vorrichtung wird zum einen erreicht, daß der Fahrzeugsitz nicht entfernt oder belastet werden muß und daß durch Aufteilung der Fahreinrichtung in zwei Gehäuse für Gas, Kupplung, Bremse und einer Schalteinrichtung das in das Fahrzeuginnere zu verbringende Einzelgewicht reduziert wird. Hierdurch entfallen Hubeinrichtungen.

Durch die Anordnung der beiden Gehäuse im Fußraum vor dem Fahrzeugsitz, wie in Anspruch 4 unter Schutz gestellt, wird eine Kompaktbauweise der Fahreinrichtung erreicht, bei der durch erfindungsgemäße Anordnung von Bedienungsmitteln an den einzelnen Gehäusen eine Ausrichtung der Verbindungsteile zu den Betätigungsteilen erreichbar ist.

Anspruch 5 stellt eine noch weitere Konfiguration der in zwei Bauteile aufgelösten Fahreinrichtung unter Schutz, die ebenfalls an der Bezugsplattform arretierbar ist.

Durch die in Anspruch 6 unter Schutz gestellten Stellmittel, die am Betätigungsgehäuse angeordnet sind, ist das Verbindungsteil über seine Grundplatte, die eine Aufhängeachse trägt und mit dieser mit dem Betätigungsgehäuse verbunden, zu dem entsprechenden Betätigungsteil ausrichtbar.

In Anspruch 7 wird der Antrieb und die Lagerung des Verbindungsteils unter Schutz gestellt, wobei das Verbindungsteil während der Aufstellphase geschützt im Wesentlichen innerhalb des Betätigungsgehäuses untergebracht ist und erst beim Betrieb aus dem Gehäuse ausgeschwenkt wird und bei Nichtübereinstimmung des Verbindungsteils mit dem Betätigungsteil Zwangskräfte dadurch vermieden werden, daß infolge Abstützung über eine Stützfeder sich ein Gelenkpunkt des sich ergebenden Gelenkvierecks verschieben kann. Bei dem an der Grundplatte erfindungsgemäß angeordneten Antrieb für das auf einer Bahnkurve ausschwenkende Verbindungsteil können fernbedienbare servo-, elektrisch-, pneumatisch- oder hydraulische Antriebe verwendet werden.

Die in Anspruch 8 unter Schutz gestellte erfinderische Ausgestaltung eines Verbindungsteils sieht einen angetriebenen Drehhebel vor, der einen Mitnehmer trägt und der an seinem freien Ende über eine Drehverbindung mit einem Gelenkhebel verbunden ist, wobei der Gelenkhebel einerseits über eine ausziehbare Stützstange mit der Schwinge verbunden ist und andererseits mit einem Betätigungsendstück. Dieses so definierte Verbindungsteil ist während des Transports bzw. Einrichtens im Betätigungsgehäuse angeordnet. Nach Einbringen des Betätigungsgehäuses in den Fußraum eines Kraftfahrzeugs und Arretierung des Gehäuses am Lenkrad wird durch Antreiben das über Gelenke verbundene Verbindungsteil auf einer Bahnkurve aus dem Gehäuse herausbewegt, bis es mit dem Betätigungsendstück nach Ausrichtung der Grundplatte reibschlüssig, beispielsweise mit dem Gaspedal, in Verbindung tritt.

Gemäss Anspruch 9 ist in Ausgestaltung des Erfindungsgegenstandes am Gelenkhebel ein Schalter angeordnet, der die Berührung zwischen Betätigungsteil und Betätigungsendstück signalisiert.

In noch weiterer Ausgestaltung des Erfindungsgegenstandes wird in Anspruch 10 ein Kraftmeßelement unter Schutz gestellt, mit dem die Betätigungskräfte auf das Betätigungsteil gemessen werden können.

Anspruch 11 stellt eine besondere Ausgestaltung des Betätigungsendstücks unter Schutz, bei dem die relative Kraftrichtung auch bei Änderung des Berührpunktes praktisch erhalten bleibt.

Durch den gemäß Anspruch 12 unter Schutz gestellten Drehantrieb mit Lagerzapfen im Schaltgehäuse der mit einem ebenfalls im Schaltgehäuse angeordneten Längsantrieb zusammenwirkt, wird erreicht, daß über eine Schiebemuffe und ein Koppelglied das Verbindungsteil sowohl drehbar als auch längsverschieblich angetrieben wird...

Eine besonders vorteilhafte Ausgestaltung des Verbindungsteils wird in Anspruch 13 unter Schutz gestellt. Hierbei wird mittels drehbeweglich verbundender Hebel und einer beweglichen Griffschale, die den Schaltknauf umfaßt, eine eindeutige zwangfreie Bewegung der Schalteinrichtung des Kraftfahrzeugs bewirkt.

Durch die Anordnung einer Zusatzfeder wird verhindert, daß die Griffschale den Formschluß zum Schaltknauf verliert, wie in Anspruch 14 unter Schutz gestellt.

Durch eine einstellbare und durch Fernbedienung arretierbare Stützstange und die Anordnung eines Gelenkstabs zwischen Hebel und beweglicher Griffschale, wie in Anspruch 15 unter Schutz gestellt, wird zum einen eine exakte Führung der Griffschale und zum anderen eine Beweglichkeit des Schaltknüppels ohne Zwangskräfte erreicht.

Die in Anspruch 16 unter Schutz gestellten Fernbedienungseinrichtungen zeigen erfinderische Möglichkeiten, eine Betätigung der Verbindungsteile von außen her zu bewirken.

Die in Anspruch 17 unter Schutz gestellte Gleichheit der Längen entsprechender Bauteile bietet praktisch die Gewähr für eine Betätigung des Schalthebels ohne Zwangskräfte.

Durch Verlängerung der entsprechenden Hebel, wie in Anspruch 18 unter Schutz gestellt, ist eine Anpassung der für die Schalteinrichtung zuständigen Fahreinrichtung an beliebige Fahrzeuge möglich.

Anspruch 19 zeigt eine erfinderische Verbindung zwischen Bezugsplattform und Lenkrad, bei der einerseits Lenkradbewegungen im interessierenden Bereich nicht behindert werden und bei der andererseits eine feste Verankerung der Gehäuse erreicht wird.

In der nachfolgenden Zeichnung wird der Erfindungsgegenstand näher erläutert.
Es zeigen:

Fig. 1 eine Anordnung des Erfindungsgegenstandes im Kraftfahrzeug
Fig. 2 ein erfindungsgemäßes Betätigungsgehäuse im Schnitt einschließlich Verbindungsteil und Betätigungsteil
Fig. 2a eine Draufsicht auf die Anordnung gemäß Fig. 2 im Bereich des Gehäuses
Fig. 3 ein erfindungsgemäßes Schaltgehäuse im Schnitt einschließlich Verbindungsteil und Betätigungsteil
Fig. 3a eine Ansicht des Schaltgehäuses und
Fig. 3b eine vergrößerte Draufsicht auf die erfindungsgemäße Griffschale.

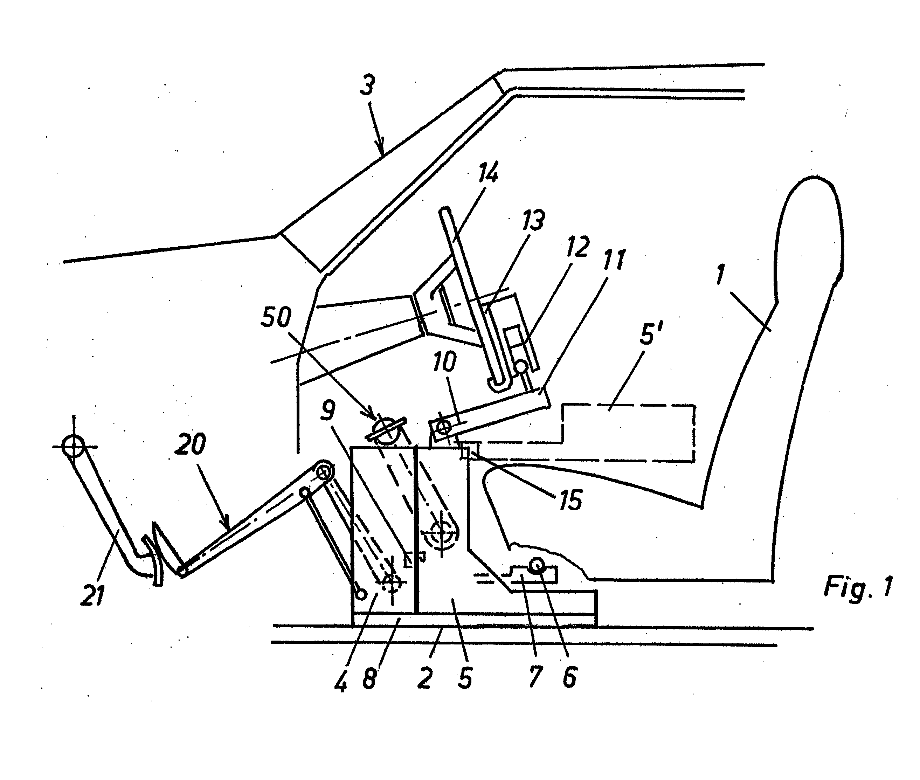

Gemäß Fig. 1 sind vor einem Fahrersitz 1 am Boden 2 eines Kraftfahrzeugs 3 ein Betätigungsgehäuse 4 und ein Schaltgehäuse 5 an einer Querstrebe 6 der Verankerung des Fahrersitzes 1 mit einer gabelartigen Halterung 7 verbunden. Das Betätigungsgehäuse 4 und das Schaltgehäuse 5 sind über eine Konsole 8, an der auch die gabelartige Halterung 7 angeordnet ist, verbunden. Andererseits sind die beiden Gehäuse 4, 5 mit arretierbaren Haltelaschen 9 verbunden, so daß es, wie in Fig. 1 dargestellt, ausreichend ist, wenn ein Verbindungsstab 10 am Schaltgehäuse 5 angreift und zum anderen in einer Klemmeinrichtung 11 an einer Anschlußplatte 12 arretier- und verschiebbar gelagert ist. Die Anschlußplatte 12 stützt sich an einer Grundplatte 13 ab, die Kugelführungen für die Anschlußlatte 12 trägt und die ihrerseits ausrichtbar mit dem Lenkrad 14 verbunden ist. Durch die Lagerung der Anschlußplatte 12 über Kugeln gegenüber der Grundplatte 13 ist während der Untersuchungen eine Lenkbewegung am Lenkrad 14 möglich.

Anstelle der Anordnung des Schaltgehäuses 5 auf der Konsole 8 kann dieses, wie gestrichelt dargestellt und mit dem Bezugzeichen 5' versehen, auch über eine Verbindung 15 mit dem dann an die Stelle des Schaltgehäuses 5 getretenen Betätigungsgehäuse 4 verbunden sein. Hierbei kann der Verbindungsstab 10 am Betätigungsgehäuse 4 angeordnet sein, oder auch am Schaltgehäuse 5'. Auch ist es möglich, das Betätigungsgehäuse 4 in die Lage des Schaltgehäuses 5' zu bringen.

Wie der Fig. 1 weiter entnehmbar ist, sind Verbindungsteile 20 zwischen dem Betätigungsgehäuse 4 und einem Betätigungsteil 21 im Ausführungsbeispiel dem Bremspedal vorgesehen. Anstelle des Bremspedals kann jedoch auch das Gas- oder Kupplungspedal treten oder es können alle drei Pedale mit drei getrennten Verbindungsteilen 20 mit dem Betätigungsgehäuse 4 verbunden sein.

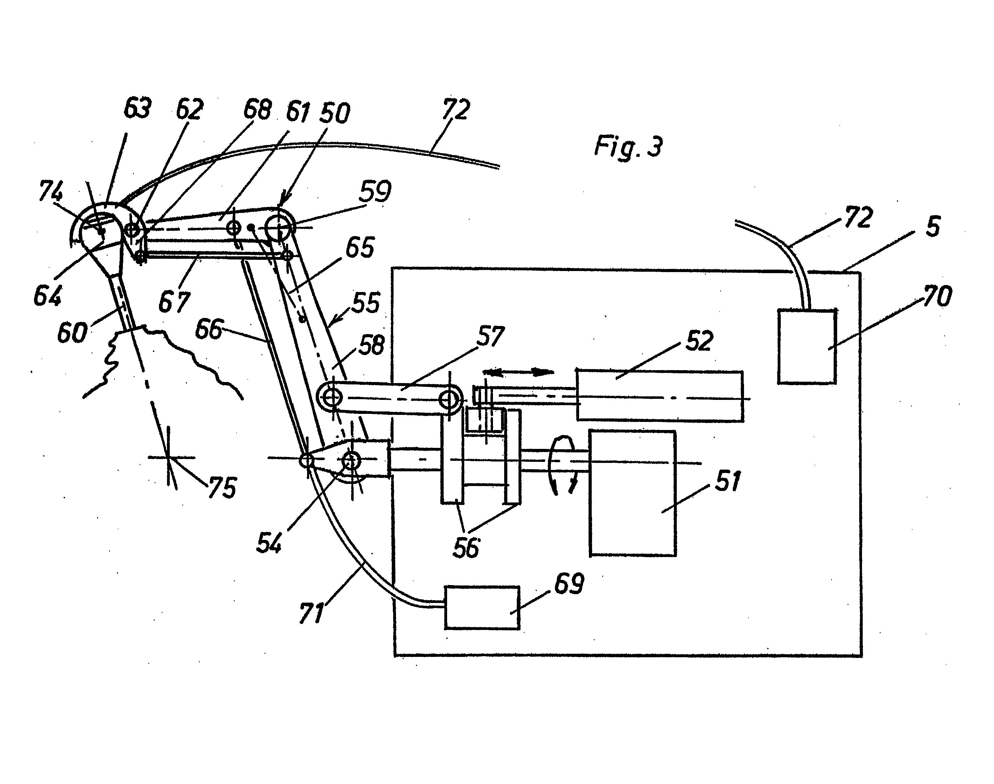

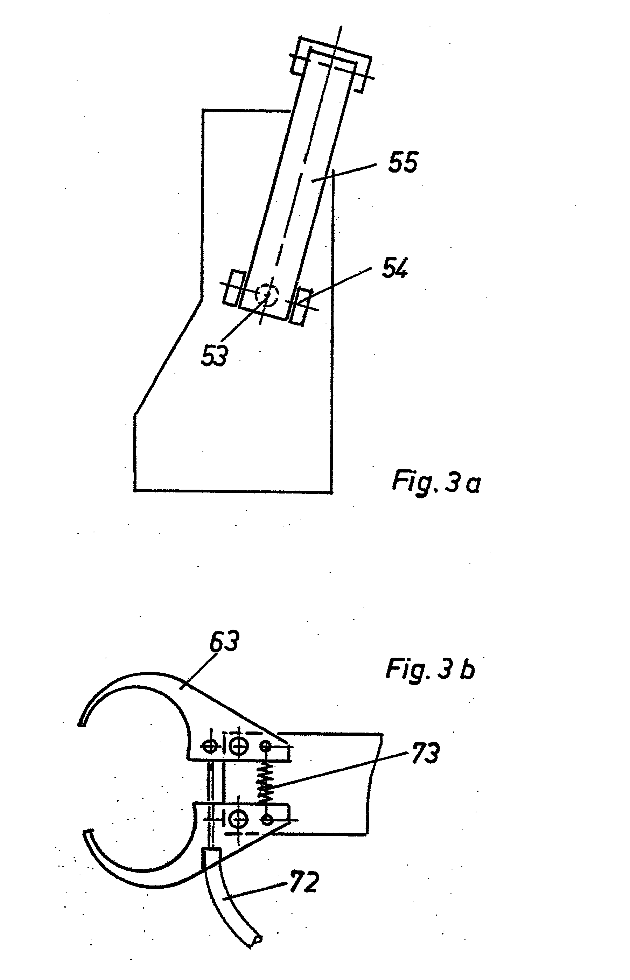

Als Verbindungsteil zwischen dem Schalteghäuse 5 und einem in Fig. 3 dargestellten Schalthebel 60 treten die in Fig. 3 ausführlich dargestellten weiteren Verbindungsteile 50.

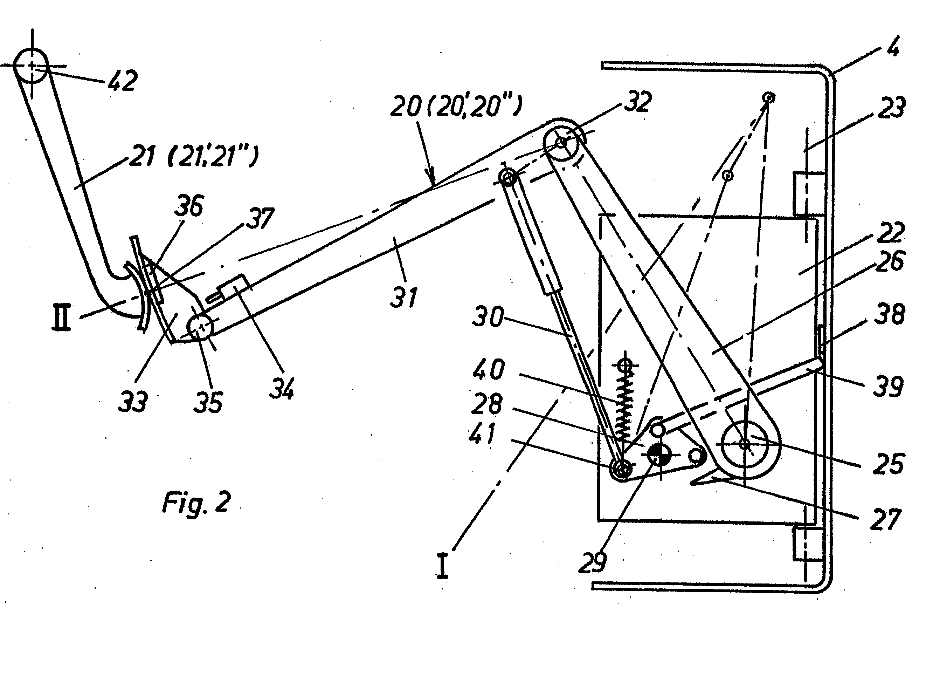

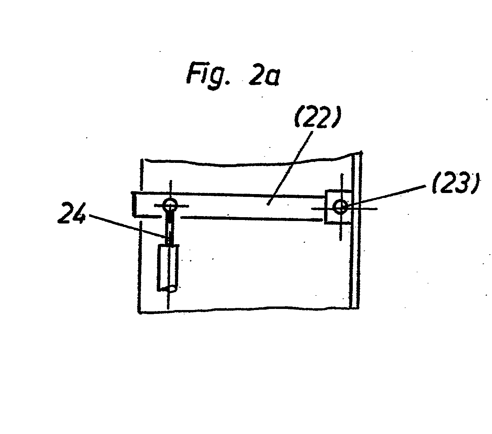

In Fig. 1 sind die Verbindungsteile 20, die im Zusammenhang mit Fig. 2 näher erläutert werden, im ausgefahrenen Zustand dargestellt, d. h. die Verbindungsteile 20 haben mit den Betätigungsteilen 21 Reibverbindung aufgenommen und stützen sich selbst gegen das Betätigungsgehäuse 4 ab. Die in Fig. 2 näher erläuterten Verbindungsteile 20 werden beim Ein- und Ausbau des Betätigungsgehäuses in den Fußraum des Kraftfahrzeugs eingeschwenkt, so daß die Kontur des Betätigungsgehäuses 4 als schmales Rechteck erscheint, welches ohne weiteres durch die Fahrertür in den Fußraum eingebracht werden kann. Darüber hinaus sind die beiden Gehäuse 4 und 5 beim Einbau voneinander getrennt, so daß ohne eine Beschädigung der Ein- und Ausbau der Gehäuse stattfinden kann; durch die Aufteilung der Fahreinrichtung in zwei Gehäuse wird darüber hinaus eine Gewichtsreduktion für das einzeln zu manipulierende Gehäuse erreicht, so daß keine zusätzlichen Hilfseinrichtungen, wie bisher unbedingt erforderlich, benötigt werden.

Das in Fig. 2 im Schnitt dargestellte Betätigungsgehäuse 4 besitzt je Betätigungsteil 21, 21', 21" je eine Grundplatte 22, die über eine Aufhängeachse 23 mit dem Betätigungsgehäuse 4 verbunden ist. Wie in Fig. 2a dargestellt, wird die Grundplatte 22 um ihre Aufhängeachse 23 mittels fernsteuerbarer Stellmittel 24 zum Betätigungsteil 21 bzw. 21', 21" so ausgerichtet, daß beim Ausschwenken des Verbindungsteils 20 bzw. 20', 20" dieses mit dem Betätigungsteil in Reibschluß treten kann.

Jedes Verbindungsteil wird von einem Drehantrieb, der servoelektrisch, servopneumatisch oder servohydraulisch ausgebildet sein kann über eine Welle 25 angetrieben. Dabei ist ein Drehhebel 26 auf die Welle 25 aufgesteckt. Bei Bewegen der Welle 25 entgegen dem Uhrzeigersinn wird der Drehhebel 26 aus seiner Position I aus dem Betägigungsgehäuse 4 bis zur Position II zur Berührung mit dem Betätigungshebel 21 ausgeschwenkt. Hierbei wird die Betätigungskraft als Drehmoment und radiale Stützkraft durch die Welle 25 eingeleitet. Am Drehhebel 26 ist darüber hinaus ein Mitnehmer 27 angeordnet, der beim Bewegen des Drehhebels 26 in Richtung des Uhrzeigers, also beim Einschwenken des Verbindungsteils 20 in das Betätigungsgehäuse eine Schwinge 28 um eine zur Grundplatte 22 orthogonal angeordnete Drehachse 29 verschwenkt, so daß über eine ausziehbare Stützstange 30, die ebenfalls an der Schwinge 28 angeordnet ist, ein Gelenkhebel 31, der über eine Drehverbindung 32 mit dem Drehhebel 26 verbunden ist, aus der Position II in die Postion I zurückgeführt werden kann.

Der Gelenkhebel 31 trägt an seinem freien Ende drehbeweglich ein Betätigungsendstück 33. Im Kontaktbereich zwischen Betätigungsendstück 33 und Betätigungsteil 21 ist die Bahnkurve so gewählt, daß diese näherungsweise der Pedalbewegung des Gaspedals bzw. des Bremspedals bzw. des Kupplungspedals folgt. Der Gelenkhebel 31 trägt darüber hinaus einen Meldeschalter 34, der bei Anliegen des Betätigungsendstücks 33 am Betätigungsteil 21 zufolge geringer Verschwenkbarkeit z.B. 1° um ein Gelenk 35, betätigt wird und somit den Reibschluß zurückmeldet. Das Betätigungsendstück 33 trägt darüber hinaus noch ein Kraftmeßelement 36. Dabei ist das Kraftmeßelement mit Anschüssen für eine Fernanzeige der Betätigungskräfte ausgestattet. Anstelle des Kraftmeß elementes können auch Dehnmeßstreifen treten. Hierbei wird erfindungsgemäß die Seite des Kraftmeßelements 36, die mit dem Betätigungsteil 21, 21', 21" in Wirkverbindung tritt oder, bei Verwendung von Dehnungsmeßstreifen, die den Betätigungsteil 21 gegenüberliegende Seite des Betätigungsendstücks 33 so ausgebildet, daß die auftretenden Kräfte praktisch in Richtung auf die Drehachse der Drehverbindung 32 wirken.

Um beim Ausschwenken des Verbindungsteils 20 das Betätigungsendstück an einem Berührpunkt 37 mit dem Betätigungsteil 21, 21', 21" in Reibschluß zu bringen, ist im Betätigungsgehäuse 4 ein Anschlag 38 vorgesehen. Dieser Anschlag 38 ist für jedes Verbindungsteil 20, 20', 20" getrennt vorgesehen und kann wie die Stellmittel 24, beispielsweise über Seilzüge, die durch Spindelantriebe manuell oder Servostellantriebe gestellt werden, eingestellt werden.

Gemäß Ausführungsbeispiel nach Fig. 2 wird die Schwinge 28 über einen Hilfsstab 39 am Anschlag 38 gehalten. Über eine Stützfeder 40 wird die Schwinge 28 an einem Anlenkpunkt 41 der Schwinge 28 in einer definierten Lage gehalten. Und zwar so lange die am Anlenkpunkt 41 angreifende Stützkraft der ausziehbaren Stützstange 30 kleiner ist als die Federkraft der Stützfeder 40.

Die Verbindungslinie zwischen dem Berührpunkt 37 und der Drehachse der Drehverbindung 32 steht näherungsweise senkrecht auf der Linie Berührpunkt 37 und Drehpunkt 42 des Betätigungsteils 21, 21′, 21″. Kommt nunmehr zwischen dem Betätigungsteil 21 und dem Betätigungsendstück 33 ein Reibschluß zustande, welcher einen Berührpunkt ergibt, der oberhalb des vorgegebenen Berührpunktes 37 liegt, wird die ausziehbare Stützstange 30 ausgezogen und die Stützkraft wird Null. Liegt der Berührpunkt unterhalb des kinematisch vorgegebenen Berührpunkts 37, lenkt die ausziehbare Stützstange 30 die Stützfeder 40 aus. Hierdurch entsteht in beiden Fällen nach Berühren des Betätigungsteils 21 ein neues Gelenkviereck mit den Gelenkpunkten Welle 25, Drehverbindung 32, Berührpunkt 37 und Drehpunkt 42 des Betätigungsteils 21, 21′, 21″ ohne daß hierdurch Zwangskräfte auf das Betätigungsteil 21 oder das Betätigungsgehäuse 4 ausgeübt werden. Die in Richtung der Linie Berührpunkt 37 Drehverbindung 32 gemessenen Kräfte sind deshalb Kräfte, die praktisch in Bahnrichtung des Berührpunktes 37 wirken und somit unbeeinflußt von Zwangskräften sind.

Das in Fig. 3 dargestellte weitere Verbindungsteil 50 wird von einem im Schaltgehäuse 5 angeordneten Drehantrieb 51 und einem Längsantrieb 52 zu einer hin- und hergehenden Bewegung und zu einer Drehbewegung veranlaßt. Im Ausführungsbeispiel nach Fig. 3 wird das weitere Verbindungsglied durch den Längsantrieb 52 in der Schaltgasse der Gangschaltung des Fahrzeugs geführt, während der Drehantrieb das weitere Verbindungsteil 50 in Schaltrichtung verschwenkt. Am freien Ende 53 seiner Welle trägt der Drehantrieb 51 einen Lagerzapfen 54 (vgl. Fig. 3a), auf dem ein Hebel 55 in Längsrichtung beweglich angeordnet ist. Der Hebel 55 wird mittels Schiebemuffe 56 und Koppelglied 57, welches beweglich am Schaft 58 des Hebels 55 angelenkt ist, verschwenkt. Der Hebel 55 ist an seinem freien Ende über ein Gelenk 59 mit einem weiteren Hebel 61 verbunden, der eine um ein Schalengelenk 62 bewegliche Griffschale 63 trägt, die den Knauf 64 eines Schalthebels 60 federbelastet umfaßt. Hebel 55 und weitere Hebel 61 sind zum anderen über eine Feder 65 verbunden, die dafür sorgt, daß ein gewisser Auflagedruck des weiteren Hebels 61 auf dem Schaltknauf 64 erzeugt wird. Durch entsprechende Überlagerung der Federvorspannung mit Hilfskräften, beispielsweise eingeleitet über einen Bowdenzug kann darüber hinaus eine weitere Belastung auf den Schaltknauf dergestalt ausgeübt werden, daß auch das Einlegen des Rückwärtsgangs ermöglicht wird. Wird der Rückwärtsgang nicht durch zusätzliches Absenken des Schalthebels 60 eingelegt, sondern durch Anheben des Schalthebels 60, wird eine Stützstange 66, die zwischen den weiteren Hebel 61 und dem freien Ende 53 der Welle angeordnet ist, durch Krafteinwirkung verlängert, ohne daß die Vorspannung der Griffschale 63 gelöst wird. Damit wird der Schalthebel in die für das Einlegen des Rückwärtsgangs erforderliche Schaltebene angehoben.

Ein am Hebel 55 angeordneter Gelenkstab 67 ist mit einem Fortsatz 68, der sich über das Schalengelenk hinaus erstreckt, verbunden. Damit wird erreicht, daß für den Schaltvorgang eine Führung der Griffschale 63 erzielt wird.

Antriebseinrichtungen 69, 70, die im Ausführungsbeispiel im Schaltgehäuse angeordnet sind, die jedoch auch außerhalb des Schaltgehäuses und außerhalb des Fahrzeugs angeordnet sein können, sind über Bowdenzüge 71 bzw. 72 mit der Stützstange 66 zur Einleitung von Kräften bzw. zur Arretierung dieser Stützstange versehen bzw. ist der Bowdenzug 72 zwischen Antriebseinrichtung 70 und Griffschale 63 angeordnet, so daß die durch eine Klemmfeder 73 aufgebrachte Vorspannung der Griffschale 63 aufgehoben werden kann (vgl. Fig. 36).

Um Zwangskräfte auszuschalten, ist die Länge des Hebels 55 zwischen dem Lagerzapfen 54 und dem Gelenk 59 gleich der Länge zwischen Schalteknaufzentrum 74 und Drehzentrum 75 des Schalthebels 60; und es ist der Abstand zwischen Drehzentrum 75 und Lagerzapfen 54 gleich dem Abstand Gelenk 59 und Schaltknaufzentrum 74. Damit bilden die Punkte 54, 59, 74 und 75 ein Parallelogramm.

Während der Schaltpausen wird von der Antriebseinrichtung 70 und dem Bowdenzug 72 die Griffschale 63 geöffnet, gleichzeitig von der Antriebseinrichtung 69 über den Bowdenzug 71 die Stützstange 66 arretiert, so daß der Schaltknauf frei beweglich ist. Zufolge Längeneinstellbarkeit des Hebels 55, des weiteren Hebels 61 und des Gelenkstabes 67 läßt sich das weitere Verbindungsteil an die Gangschaltung eines jeden Fahrzeugs anpassen.

**Patentansprüche**

1. Verfahren zur automatischen Bewegung eines Kraftfahrzeugbetätigungsteils (21, 21′,21″) durch eine Fahreinrichtung, wobei zwischen Fahreinrichtungsgehäuse (4, 5) und Betätigungsteil (21, 21′, 21″) mechanisch eine Verbindung hergestellt wird, dadurch gekennzeichnet, daß eine Orientierung des Verbindungsteils während der Betätigung am Betätigungsteil (21 bzw. 60) erfolgt und daß bei der Übertragung von Kräften auf das Betätigungsteil (21 bzw. 60) auftretende Zwangskräfte, hervorgerufen durch unterschiedliche vorgegebene Bewegungsbahnen in einem Berührpunkt von Betätigungsteil (21 bzw. 60) und mechanischem Verbindungsteil (20, 20′, 20″ bzw. 50) im mechanischen Verbindungsteil (20, 20′, 20″ bzw. 50) kompensiert werden.

2. Verfahren nach Anspruch 1, dadurch gekennzeichnet, daß bei mehreren Betätigungsteilen (21, 21′, 21″, 60) jedem ein mechanisches Verbindungsteil (20, 20′, 20″, 50) zugeordnet ist und daß auftretende Zwangskräfte unabhängig voneinander in jedem mechanischen Verbindungsteil (20, 20′, 20″, 50) kompensiert werden.

3. Vorrichtung zur Durchführung des Verfahrens nach Anspruch 1 oder 2 mit einem im Fahrgastraum eines Kraftfahrzeugs arretiert angeordneten Gehäuse und an diesem angeordneten, angetrieben ausfahrbaren Verbindungsteilen, dadurch gekennzeichnet, daß ein im Fahrgastraum des Kraftfahrzeugs (3) angeordnetes Betätigungsgehäuse (4) für jedes Verbindungsteil (20) für in einer Richtung zu bewegende Betätigungsteile ((Bremse) 21, (Gas) 21', (Kupplung) 21") einen Antrieb besitzt, daß jedes Verbindungs teil (20, 20', 20") am entsprechenden Betätigungsteil (21, 21', 21") orientierbar ist, daß ein Betätigungsteil (21, 21', 21") orientierbar ist, daß ein im Fußraum des Kraftfahrzeugs (3) angeordnetes Schaltgehäuse (5) zwei Antriebe (51, 52) für ein Verbindungsteil (50) für in mindestens zwei Richtungen zu bewegende Betätigungsteile (60) besitzt, daß beide Gehäuse (4, 5 bzw. 5') miteinander verbindbar (9) sind, daß mindestens ein Gehäuse (4 bzw. 5) im Fußraum vor dem Fahrersitz (1) angeordnet ist und daß mindestens ein Gehäuse (4 bzw. 5 bzw. 5') mit einer am Lenkrad (14) und zu diesem ausrichtbar angeordneten, aus Grundplatte (13) und Anschlußplatte (12) bestehenden Bezugsplattform verbindbar ist.

4. Vorrichtung nach Anspruch 3, dadurch gekennzeichnet, da beide Gehäuse (4, 5) im Fußraum des Kraftfahrzeugs (3) vor dem Fahrersitz (1) am Boden (2) angeordnet, miteinander verbindbar (9) und über einen verstellbaren Steg (10) mit der Bezugsplattform (12, 13) verbunden und so arretiert aufgestellt werden.

5. Vorrichtung nach Anspruch 3, dadurch gekennzeichnet, daß ein Gehäuse (4) im Fußraum vor dem Fahrersitz (1) und das andere Gehäuse (5') an diesem angelenkt, einen Winkel von etwa 90° einnimmt und sich über dem Fahrersitz (1) erstreckt, ohne sich auf diesem abzustützen, und daß dieses Gehäuse (5') mit der Bezugsplattform (12, 13) verbunden ist.

6. Vorrichtung nach einem der vorhergehenden Ansprüche, dadurch gekennzeichnet, daß am Betätigungsgehäuse (4) insbesondere fernbedienbare Stellmittel (24) vorgesehen sind, daß das Verbindungsteil (20) eine Grundplatte (22) trägt, die über eine Aufhängeachse (23) mit dem Betätigungsgehäuse (4) verbunden ist.

7. Vorrichtung nach Anspruch 6, dadurch gekennzeichnet, daß an der Grundplatte (22) eine Schwinge (28) auf einer im wesentlichen orthogonal zur Grundplatte verlaufenden Drehachse (29) angeordnet ist, daß die Schwinge (28) mittels Einstellung ihrer Schwenkbewegung an einem Anschlag (38) und mittels Aufhängung über eine Stützfeder (40) eine vorgebbare Lage einnimmt und daß ein an der Grundplatte (22) angeordneter Antrieb über eine Welle (25) das Verbindungsteil (20) antreibt.

8. Vorrichtung nach Anspruch 7, dadurch gekennzeichnet, daß als Verbindungsteil an dem Antrieb ein Drehhebel (26) angeordnet ist, daß der Drehhebel (26) einen Mitnehmer (27) trägt und daß er an seinem freien Ende über eine Drehverbindung (32) mit einem Gelenkhebel (31) verbunden ist, daß der Gelenkhebel (31) einerseits über eine ausziehbare Stützstange (30) mit einer Schwinge (28) an der Stelle verbunden ist, an der eine Stützfeder (40) angreift und andererseits drehbeweglich mit einem Betätigungsendstück (33) verbunden ist.

9. Vorrichtung nach Anspruch 8, dadurch gekennzeichnet, daß am Gelekhebel (31) ein Meldeschalter (34) für die Meldung der Berührung zwischen Betätigungsendstück (33) und Betätigungsteil (21 bzw. 21' bzw. 21") vorgesehen ist.

10. Vorrichtung nach Anspruch 8 und Anspruch 9, dadurch gekennzeichnet, daß das Betätigungsendstück (33) ein Kraftmeßelement (36) mit Anschlüssen für eine Fernanzeige der Betätigungskräfte besitzt.

11. Vorrichtung nach Anspruch 10, dadurch gekennzeichnet, daß die Seite des Kraftelements (36), die mit dem Betätigungsteil (21 bzw. 21' bzw. 21") in Wirkverbindung tritt oder, bei Verwendung von Dehnmeßstreifen, die dem Betätigungsteil (21 bzw. 21' bzw. 21") gegenüberliegende Seite des Betätigungsendstücks (33) so geformt ist, daß die Kräfte praktisch in Richtung vom Berührpunkt (37) auf das Zentrum der Drehverbindung (32) gemessen werden.

12. Vorrichtung nach einem der Ansprüche 3 bis 5, dadurch gekennzeichnet, daß ein im Schaltgehäuse (5) angeordneter Drehantrieb (51) am freien Ende (53) mit einer Welle, die aus dem Schaltgehäuse austritt, einen orthogonal zur Wellenachse sich erstreckenden Lagerzapfen (54) trägt, daß innerhalb des Schaltgehäuses (5) ein Längsantrieb (52) vorgesehen ist, daß der Längsantrieb (52) eine auf der Welle des Drehantriebs (51) befindliche und sich mit diesem bewegende Schiebemuffe (56) antreibt, daß an der Schiebemuffe (56) ein bewegliches Koppelglied (57) angeordnet ist, das mit seinem freien Ende auf derselben Seite wie die Welle aus dem Schaltgehäuse (5) austritt und daß das weitere Verbindungsteil (55) mit dem Lagerzapfen (54) und dem freien Ende des Koppelglieds (57) verbunden ist.

13. Vorrichtung nach Anspruch 12, dadurch gekennzeichnet, daß als Verbindungsteil ein in Richtung der Wellenachse beweglicher Hebel (55) mit dem Lagerzapfen (54) verbunden ist, daß das freie Ende des Koppelgliedes (57) beweglich am Schaft (58) des Hebels (55) angelenkt ist, daß das freie Ende des Hebels (55) mit einem weiteren Hebel (61) verbunden ist, der an seinem Ende eine bewegliche Griffschale (63) für das Betätigungsteil (60) trägt.

14. Vorrichtung nach Anspruch 13, dadurch gekennzeichnet, daß der Hebel (55) und der weitere Hebel (61) mittels einer Feder (65) zusätzlich verbunden sind.

15. Vorrichtung nach Anspruch 13, dadurch gekennzeichnet, daß der weitere Hebel (61) über eine einstellbare und arretierbare Stützstange (66) mit dem freien Ende (53) der Welle des Drehantriebs (51) verbunden ist und daß ein Gelenkstab (67) gelenkig mit dem Hebel (55) und der beweglichen Griffschale (63) verbunden ist.

16. Vorrichtung nach Anspruch 15, dadurch gekennzeichnet, daß die Bewegung und Arretierung der Stützstange (66) und die Arretierung der Griffschale (63) von Antriebseinrichtungen (69, 70) über Bowdenzüge (71, 72) durchgeführt werden.

17. Vorrichtung nach einem der Ansprüche 12 bis 16, dadurch gekennzeichnet, daß einerseits die Länge des Hebels (55) praktisch gleich dem Abstand zwischen Drehzentrum (75) und Knaufzentrum (74) des Schalthebels und andererseits die Länge des weiteren Hebels (61) praktisch gleich ist dem Abstand zwischen Drehzentrum (75) des Schalthebels und dem Lagerzapfen (54) auf der Wellenachse.

18. Vorrichtung nach Anspruch 17, dadurch gekennzeichnet, daß der Hebel (55), der weitere Hebel (61) und der Gelenkstab (67) in ihrer Länge einstellbar sind.

19. Vorrichtung nach Anspruch 3, dadurch gekennzeichnet, daß die Grundplatte (22) Kugelführungen für an der Anschlußplatte (12) angeordnete Führungskugeln besitzt und daß die Anschlußplatte (12) eine Klemmeinrichtung (11) für einen Verbindungsstab (10) zwischen Anschlußplatte und mindestens einem Gehäuse (4, 5) besitzt.

## Claims

1. Process for automatic movement of a vehicle actuating part (21, 21', 21") by a driving device, where a mechanical connection is produced between the driving device housing (4, 5) and the actuating part (21, 21', 21") characterized by the fact that orientation of the connecting part occurs during actuation at the actuating part (21 or 60 respectively) and that in transmitting forces to the actuating part (21 or 60 respectively), the compulsive forces occurring, caused by different given paths are compensated at a point of contact of the actuating part (21 or 60 respectively) and the mechanical connecting part (20, 20', 20" or 50 respectively) in the mechanical connecting part (20, 20', 20" or 50 respectively).

2. Process according to claim 1, characterized by the fact that with several actuating parts (21, 21', 21", 60), each has a mechanical connecting part (20, 20', 20", 50) assigned to it and that the compulsive forces occurring are compensated in each mechanical connecting part (20, 20', 20", 50) independently of one another.

3. Device for carrying out the process according to claim 1 or 2 with a housing situated fixed in the passenger space of a vehicle and driven movable connecting parts situated in the said housing, characterized by the fact that an actuating housing (4) for each connecting part (20) for actuating parts to be moved in one direction (brake) 21, (accelerator) 21' and (clutch) 21", situated in the passenger space of the vehicle (3), has a drive that each connecting part (20, 20', 20"), can be orientated on the corresponding actuating part (21, 21', 21"), that a gearbox housing (5) situated in the legroom of the vehicle (3) has two drives (51, 52) for a connecting part (50) for actuating parts (60), to be moved in at least two directions, that both housings (4, 5 or 5') can be connected together (9), that at least one housing (4 or 5) is situated in the legroom in front of the driver's seat (1), and that at least one housing (4 or 5 or 5') can be connected to a reference platform consisting of a baseplate (13) and a connecting plate (12) situated at the steering wheel (14) and which can be aligned relative to it.

4. Device according to claim 3, characterized by the fact that both housings (4, 5) are placed situated in the legroom of the vehicle (3) in front of the driver's seat (1) on the floor (2), can be connected to one another (9), are connected via an adjustable bar (10) to the reference platform (12, 13) and are fixed in this way.

5. Device according to claim 3, characterized by the fact that a housing (4) in the legroom in front of the driver's seat (1) and the other housing (5') joined to it are at an angle of approximately 90° and extend over the driver's seat (1), without being supported on it, and that this housing (5') is connected to the reference platform (12, 13).

6. Device according to one of the preceding claims, characterized by the fact that special remotely controllable means of setting (24) are provided on the actuating housing (4), that the connecting part (20) carries a baseplate (22) which is connected via a suspension axis (23) with the actuating housing (4) and that the baseplate (22) can be aligned to the actuating part (21) by means of setting (24).

7. Device according to claim 6, characterized by the fact that a rocker arm (28) on the baseplate (22) is situated on the axis of rotation (29) running orthogonally to the baseplate, that the rocker arm (28) takes up a predetermined position by setting its rotary movement at a stop (38) and by suspension via a supporting spring (40) and that a drive situated on baseplate (27) drives the connecting part (20) via a shaft (25).

8. Device according to claim 7, characterized by the fact that a rotating lever (26) is situated on the drive as the connecting part, that the rotating lever (26) carries a dog (27) and that at its free end it is connected to a toggle joint (31) via a rotating connection (32), that the toggle joint (31) is connected on the one hand via a support bar (30), which can be pulled out to a rocker arm (28) at a position where the supporting spring (40) acts, and on the other hand, is connected to an actuating end piece (33) so as to be able to rotate.

9. Device according to claim 8, characterized by the fact that signal switch (34) for signalling contact between the actuating end piece (33) and the actuating part (21 or 21' or 21") is provided at the toggle joint (31).

10. Device according to claim 8 and claim 9, characterized by the fact that the actuating end piece (33) has a force measuring element (36) with connections for remote display of the actuating forces.

11. Device according to claim 10, characterized by the fact that the side of the force measuring element (36), which is connected to the actuating part (21 or 21' or 21"), or if strain gauges are used, the opposite site of the actuating end piece (33) to the actuating part (21 or 21' or 21") is shaped so that in practice the forces are measured in the direction from the point of contact (37) to the centre of the rotating connection (32).

12. Device according to one of claims 3 to 5, characterized by the fact that a rotating drive (51) situated in a gearbox (5) with a shaft on the free end (53) carries a journal bearing (54) extending orthogonally to the axis of the shaft which emerges from the gearbox, that inside the gearbox (5) there is a longitudinal drive (52) that the longitudinal drive (52) drives a moving sliding sleeve (56) situated on the shaft of the rotating drive (51) and moving with it, that there is situated on the sliding sleeve (56) a moving linkage (57), the free end of which emerges from the gearbox housing (5) on the same side as the shaft and that the further connecting part (55) is connected to the bearing journal (54) and to the free end of the linkage (57).

13. Device according to claim 12, characterized by the fact that a lever (55), movable in the direction of the shaft axis is connected as connecting part to the bearing journal (54), that the free end of the linkage (57) is jointed so as to move on shank (58) of lever (55), that the free end of lever (55) is connected to a further lever (61), which carries a movable pistol stock (63) for the actuating part (60) at its end.

14. Device according to claim 13, characterized by the fact that lever (55) and the further lever (61) are additionally connected by means of a spring (65).

15. Device according to claim 13, characterized by the fact that the further lever (61) is connected via a support bar (66) which can be adjusted and stopped to the free end (53) of the shaft of the rotating drive (51) and that a link bar (67) is connected to lever (55) and the movable pistol stock (63).

16. Device according to claim 15, characterized by the fact that the movement and stopping of the support bar (66) and the stopping of the pistol stock (63) are done by drive devices (69, 70) via Bowden cables (71, 72).

17. Device according to one of claims 12 to 16, characterized by the fact that on the one hand, the length of lever (55) is in practice, equal to the distance between the centre of rotation (75) and the centre of the knob (74) of the gearlever and, on the other hand, the length of the further lever (61) is, in practice, equal to the distance between the centre of rotation (75) of the gearlever and the bearing journal (54) on the shaft axis.

18. Device according to claim 17, characterized by the fact that the lever (55), the further lever (61) and the link bar (67) are adjustable in length.

19. Device according to claim 3, characterized by the fact that the baseplate (22) has spherical guides for guide spheres situated on the connecting plate (12) and that the connecting plate (12) has a clamping device (11) for a connecting bar (10) between the connecting plate and at least one housing (4, 5).

**Revendications**

1. Procédé pour déplacer automatiquement un organe d'actionnement de véhicule automobile (21, 21', 21") par un dispositif de commande, une liaison étant réalisée entre le boitier (4, 5) du dispositif de commande et l'organe d'actionnement (21, 21', 21"), caractérisé en ce qu'une orientation de l'élément de liaison a lieu pendant l'actionnement sur l'organe d'actionnement (21 ou 60), et en ce que l'on compense les forces de liaison apparaissant lors de la transmission de force à l'organe d'actionnement (21 ou 60), provoquées par des trajectoires prédéterminées différentes en un point de contact de l'organe d'actionnement (21 ou 60) et l'organe de liaison mécanique (20, 20', 20" ou 50) dans l'organe de liaison mécanique (20, 20', 20" ou 50).

2. Procédé selon la revendication 1, caractérisé en ce que, dans le cas de plusieurs organes d'actionnement (21, 21', 21", 60), un organe de liaison mécanique (20, 20', 20", 50) correspond à chacun d'eux, et en ce que des forces de liaison qui se présentent sont compensées indépendamment les unes des autres dans chaque organe de liaison mécanique (20, 20', 20", 50).

3. Dispositif pour mettre en œvre le procédé selon la revendication 1 ou 2, comportant un boîtier disposé de façon à être bloqué dans le compartiment passagers d'un véhicule automobile et des organes de liaison placés sur lui, pouvant sortir en étant entraînés, caractérisé en ce qu'un boîtier d'actionnement (4) pour chaque organe de liaison (20), placé dans le compartiment passagers du véhicule automobile (3), comporte un mécanisme d'entraînement pour des organes d'actionnement à déplacer dans une direction (frein) 21, (accélérateur) 21', (embrayage) 21"), en ce que chaque organe de liaison (20, 20', 20") peut être orienté sur l'organe d'actionnement correspondant (21, 21', 21"), en ce qu'un boîtier de manœuvre (5) placé dans l'espace des pieds du véhicule automobile (3) comporte deux mécanismes d'entraînement (51, 52) pour un organe de liaison (50) pour des organes d'actionnement (60) à déplacer dans au moins deux directions, en ce que les deux boîtiers (4, 5 ou 5') peuvent être reliés mutuellement (9), en ce qu'au moins un boîtier (4 ou 5) est placé dans l'espace des pieds devant le siège du conducteur (1), et en ce qu'au moins un boîtier (4, ou 5, ou 5') peut être relié à une plate-forme de référence comprenant une plaque de base (13) et une plaque de raccordement (12), placée sur le volant (14) et pouvant être orientée par rapport à lui.

4. Dispositif selon la revendication 3, caractérisé en ce que les deux boîtiers (4, 5) sont montés dans l'espace des pieds du véhicule automobile (3) devant le siège du conducteur (1) sur le plancher (2), de façon à pouvoir être reliés mutuellement (9) et à être reliés par l'intermédiaire d'une entreprise (10) déplaçable à la plate-forme de référence (12, 13) et à être ainsi bloqués.

5. Dispositif selon la revendication 3, caractérisé en ce qu'un boîtier (4) s'étend dans l'espace des pieds devant le siège du conducteur (1), tandis que l'autre boîtier (5') lui est articulé, fait un angle d'environ (90°) et s'étend sur le siège du conducteur (1), sans s'y appuyer, et en ce que ce boîtier (5') est relié à la plate-forme de référence (12, 13).

6. Dispositif selon l'une des revendications précédentes, caractérisé en ce que l'on prévoit sur le boîtier d'actionnement (4) en particulier des moyens de positionnement (24) commandés à distance, en ce que l'organe de liaison (20) porte une plaque de base (22) qui est reliée par l'intermédiaire d'un axe de suspension (23) au boîtier d'actionnement (4), et en ce que la plaque de base (22) peut être orientée par rapport à l'organe d'actionnement (21) à l'aide des moyens de positionnement (24).

7. Dispositif selon la revendication 6, caractérisé en ce qu'une bielle oscillante (28) est placée, sur la plaque de base (22), sur un axe de rotation (29) s'étendant sensiblement orthogonalement à la plaque de base, en ce que la bielle oscillante (28) prend, par réglage de son mouvement de pivotement sur une butée (38) et par une suspension au moyen d'un ressort d'appui (40), une position prédéterminable, et en ce qu'un mécanisme d'entraînement placé sur la plaque de base (22) entraîne l'organe de liaison (20) par l'intermédiaire d'un arbre (25).

8. Dispositif selon la revendication 7, caractérisé en ce qu'un levier rotatif (26) est placé, comme organe de liaison, sur le mécanisme d'entraînement, en ce que le levier rotatif (26) porte un entraîneur (27), et en ce qu'il est relié à son extrémité libre, par l'intermédiaire d'une liaison de rotation (32), à un levier articulé (31), en ce que le levier articulé (31) est relié d'une part par l'intermédiaire d'une barre d'appui rétractable (30) à une bielle oscilliante (28) au point d'application d'un ressort d'appui (40) et, d'autre part, de façon à permettre la rotation, à un embout d'actionnement (33).

9. Dispositif selon le revendication 8, caractérisé en ce qu'on prévoit sur le levier articulé (31) un interrupteur de signalisation (34) pour signaler le contact entre l'embout d'actionnement (33) et l'organe d'actionnement (21 ou 21', ou 21").

10. Dispositif selon des revendications 8 et 9, caractérisé en ce que l'embout d'actionnement (33) comporte un élément dynamométrique (36) pourvu de connexions pour indiquer à distance les forces d'actionnement.

11. Dispositif selon la revendication 10, caractérisé en ce que le côté de l'élément dynamométrique (36) qui entre en liaison fonctionnelle avec l'organe d'actionnement (21 ou 21', ou 21") ou, lorsqu'on utilise une jauge extensométrique, le côté de l'embout d'actionnement (33) opposé é l'organe d'actionnement (21, ou 21', ou 21"), est conformé de façon que les forces soient mesurées pratiquement dans la direction du point de contact (37) au centre de la liaison de rotation (32).

12. Dispositif selon l'une des revendications 3 à 5 caractérisé en ce qu'un mécanisme d'entraînement en rotation (51), placé dans le boîtier de manœuvre (5), comporte, à l'extrémité libre (53) comportant un arbre qui sort du boîtier de manœuvre, un tourillon (54) s'étendant orthogonalement à l'axe de l'arbre, en ce qu'un mécanisme d'entraînement longitudinal (52) est prévu à l'intérieur du boîtier de manœuvre (5), en ce que le mécanisme d'entraînement longitudinal (52) entraîne un manchon coulissant (56) se trouvant sur l'arbre du mécanisme d'entraînement en rotation (51) et se déplaçant avec lui, en ce qu'un organe d'accouplement (57) mobile est placé sur le manchon coulissant (56), lequel organe sort par son extrémité libre du boîtier de manœuvre (5) du même côté que l'arbre, et en ce que l'autre organe de liaison (55) est relié au tourillon (54) et à l'extrémité libre de l'organe d'accouplement (57).

13. Dispositif selon la revendication 12, caractérisé en ce qu'en tant qu'organe de liaison, un levier (55) mobile dans la direction de l'axe de l'arbre est relié au tourillon (54), en ce que l'extrémité libre de l'organe d'accouplement (57) est articulé de façon à être mobile à l'axe (58) du levier (55), en ce que l'extrémité libre du levier (55) est reliée à un autre levier (61) qui porte à son extrémité une pièce de prise (63) pour l'organe d'actionnement (60).

14. Dispositif selon la revendication 13, caractérisé en ce que le levier (55) et l'autre levier (61) sont reliés, en plus, par un ressort (65).

15. Dispositif selon la revendication 13, caractérisé en ce que l'autre levier (61) est relié, par une barre d'appui (66) réglable et blocable, à l'extrémité libre (53) de l'arbre du mécanisme d'entraînement en rotation (51), et en ce qu'une barrette d'articulation (67) est articulée au levier (55) et à la pièce de prise mobile (63).

16. Dispositif selon la revendication 15, caractérisé en ce que le mouvement et le blocage de la barre d'appui (66) et le blocage de la pièce de prise (63) sont effectués par des mécanismes d'entraînement (69, 70) par l'intermédiaire de câble Bowden (71, 72).

17. Dispositif selon l'une des revendications 12 à 16, caractérisé en ce que d'une part la longueur du levier (55) est pratiquement égale à la distance entre le centre de rotation (75) et le centre (74) de la tête du levier de manœuvre et, d'autre part, la longueur de l'autre levier (61) est pratiquement égale à la distance entre le centre de rotation (75) du levier de manœuvre et le tourillon (54) de l'axe de l'arbre.

18. Dispositif selon la revendication 17, caractérisé en ce que le levier (55), l'autre levier (61) et la barrette d'articulation (67) ont une longueur réglable.

19. Dispositif selon la revendication 3, caractérisé en ce que la plaque de base (22) comporte des guidages pour des billes de guidage placées sur la plaque de raccordement (12), et en ce que la plaque de raccordement (12) comporte un dispositif de serrage (11) pour une barrette de liaison (10) entre la plaque de raccordement et au moins un boîtier (4, 5).

Fig. 1

EP 0 236 518 B1

Fig. 2

42

20 (20,20")

32

4

23

21 (21,21")

36

37

22

26

31

30

38

39

II

34

40

28

41

25

33

35

I

29

27

EP 0 236 518 B1

## Fig. 2a

(22)

(23)

24

Fig. 3

EP 0 236 518 B1

55

54

53

*Fig. 3 a*

63

*Fig. 3 b*

73

72